# EUROPEAN PATENT APPLICATION

(11) **EP 1 276 290 A2**
(43) Date of publication of application: **15.01.2003**
(21) Application number: 02012462.4
(22) Date of filing: 11.06.2002
(51) Int. Cl.: H04L 27/26, H04L 1/20

(54) **Modem apparatus with error detection functions**

(30) Priority: 28.06.2001 JP 2001196505
(71) Applicant: MATSUSHITA GRAPHIC COMMUNICATION SYSTEMS, INC., Meguro-ku Tokyo 153-8687 (JP)
(72) Inventor: Tomita, Keiichi, Yokohama-shi, Kanagawa 222-0032 (JP); Noma, Nobuhiko, Yokohama-shi, Kanagawa 227-0033 (JP); Imai, Tatsuo, Chigasaki-shi, Kanagawa 253-0005 (JP)
(74) Representative: Grünecker, Kinkeldey, Stockmair & Schwanhäusser Anwaltssozietät

(57) **Abstract**

In multi-carrier communication, error amounts, which are deviations between the coordinate points of eye patterns detected from actual reception signals of each sub-carrier, and the target coordinate points of eye patterns from the reception signals are calculated by an eye pattern display controller and displayed on an oscilloscope.

## Description

### BACKGROUND OF THE INVENTION

### 1. Field of the Invention

The present invention relates to a modem apparatus with error detection functions and an error detection method that detect communication errors from observations of reception status based on eye patterns detected from reception signals in multi-carrier communication.

### 2. Description of Related Art

Conventionally, for a maintenance check of modem apparatuses, reception status is observed to detect factors for communication malfunction. A maintenance check is performed by connecting an oscilloscope to a modem, displaying an eye patterns that is detected on the oscilloscope from reception signals, and comparing the eye pattern with a normal eye pattern.

Fig. 9 (a) illustrates a normal eye pattern that is detected from 2-bit reception signals. As shown in Fig. 9 (a), normal eye patterns are detected at the same places without differing from one another; therefore, each point of the eye pattern is displayed in small dots on the oscilloscope screen as a result.

Fig. 9 (b) illustrates an abnormal eye pattern in case of imperfect line conditions. As shown in Fig. 9 (b), detected signal points are diverged compared to the normal signal points; thus, each point of the eye pattern is displayed in large dots on the oscilloscope screen as a result.

Figs. 10 (a) and (b) illustrate eye patterns, in normal and abnormal situations respectively, both which are detected from 4-bit reception signals. Amaintenance check of a modem apparatus is performed by comparing such normal and abnormal eye patterns.

The above maintenance method for a modem apparatus can be used in single-carrier communication; however, the same cannot be applied for ADSL modems that employ multi-carrier communication.

In other words, in single-carrier communication, maintenance check can be performed by displaying one eye pattern of reception signals in a single-carrier, by an oscilloscope. However, in multi-carrier communication, due to the restriction of apparatuses, an oscilloscope can only display an eye pattern of reception signals in one of the multi-carriers, and eye patterns of reception signals of other carriers are not displayed. Therefore, in multi-carrier communication, it has been impossible to perform a maintenance check of modem apparatuses and to detect communication errors.

### SUMMARY OF THE INVENTION

This invention is provided in view of the above-described problems. The object of the present invention is to provide a modem apparatus with error detection functions and an error detection method that enable an observer to detect communication errors from observations of reception status based on eye patterns detected from reception signals, even in multi-carrier communication.

In the present invention, in multi-carrier communication, error amounts, which are deviations between the coordinate points of eye patterns detected from actual reception signals of each sub-carrier, and the target coordinate points of eye patterns from the reception signals are displayed on an error detector, such as an oscilloscope.

Accordingly, the error amount of reception signals of each sub-carrier can be displayed as an eye pattern on the error detector. Therefore, it is possible to enable an observer to detect communication errors, through observations of reception status, based on eye patterns that are detected from reception signals of all sub-carriers even in multi-carrier communication.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:

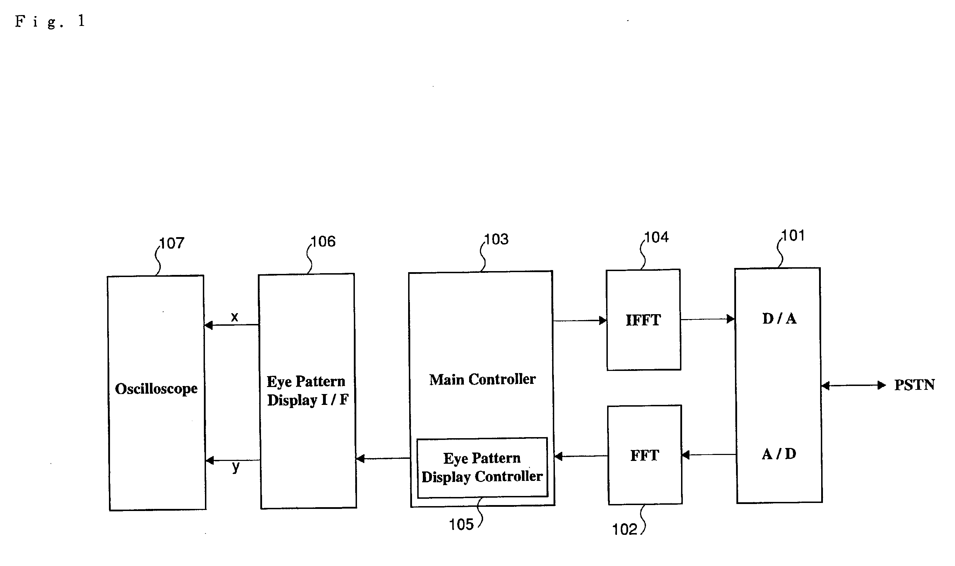

Fig. 1 is a block diagram illustrating a configuration of a modem apparatus with error detection functions, according to the first embodiment of the present invention;

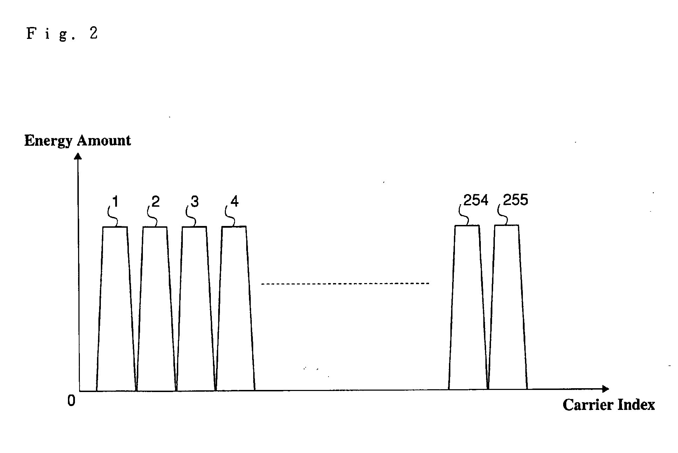

Fig. 2 illustrates frequency characteristics of multi-carriers in a DMT method, which is used in ITU-T standards, such as G. 922. 1;

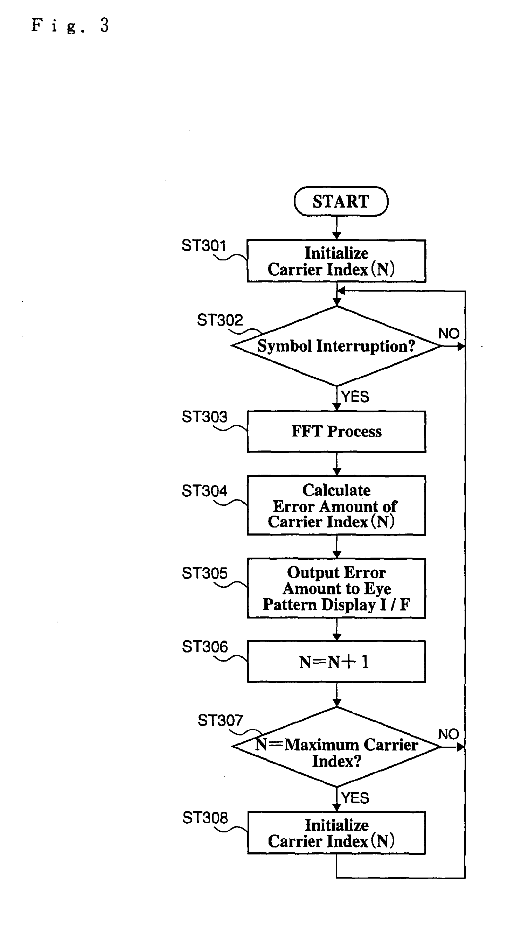

Fig. 3 is a flowchart illustrating an error amount calculation of reception signals at the modem apparatus with error detection functions, according to the modem apparatus with error detection functions of the first embodiment;

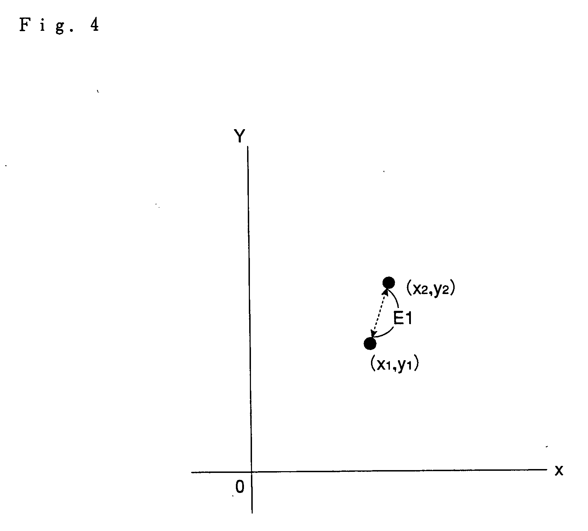

Fig. 4 illustrates a reception point of an actual reception signals and a target point plotted from the reception signals as coordinate points on an X-Y plane of an oscilloscope display screen, according to the modem apparatus with error detection functions of the first embodiment;

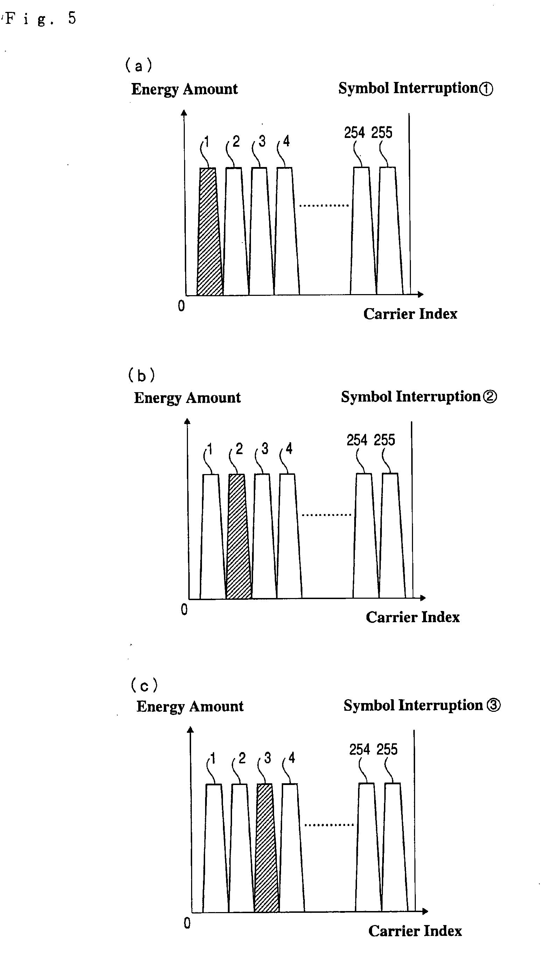

Fig. 5 illustrates sub-carriers that are processed to calculate error amounts of reception signals according to the modem apparatus with error detection functions of the first embodiment;

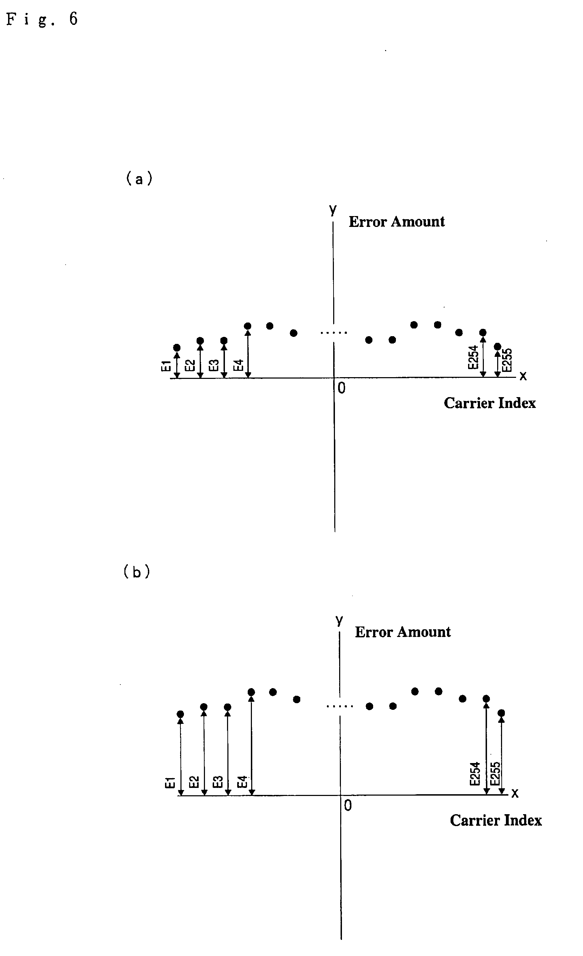

Fig. 6 (a) illustrates an example of the oscilloscope screen displaying a normal-error amount that is output by the modem apparatus with error detection functions, according to the first embodiment of the present invention;
Fig. 6 (b) illustrates an example of the oscilloscope screen displaying an abnormal error amount that is output by the modem apparatus with error detection functions, according to the first embodiment of the present invention;

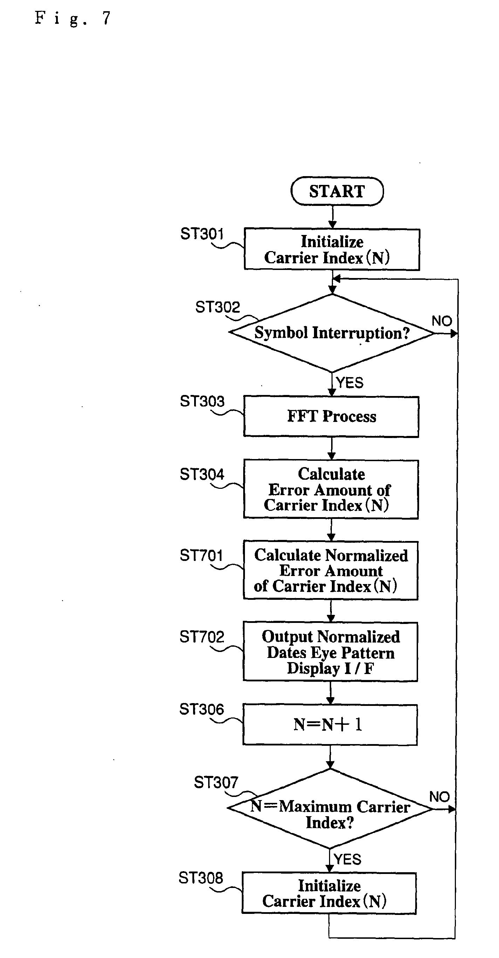

Fig. 7 is a flowchart illustrating a normal error amount calculation of reception signals by the modem apparatus with error detection functions, according to the first embodiment of the present invention;

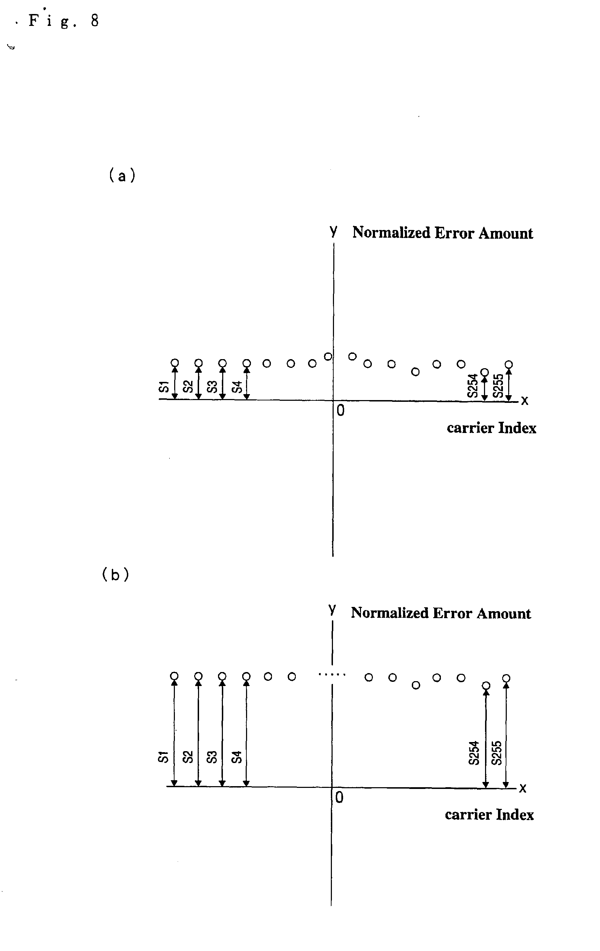

Fig. 8 (a) illustrates an example of the oscilloscope screen displaying a normalized error amount in a normal condition, which is output by the modem apparatus with error detection functions, according to the second embodiment of the present invention;
Fig. 8 (b) illustrates an example of the oscilloscope screen displaying a normalized error amount in an abnormal condition, which is output by the modem apparatus with error detection functions, according to the second embodiment of the present invention;

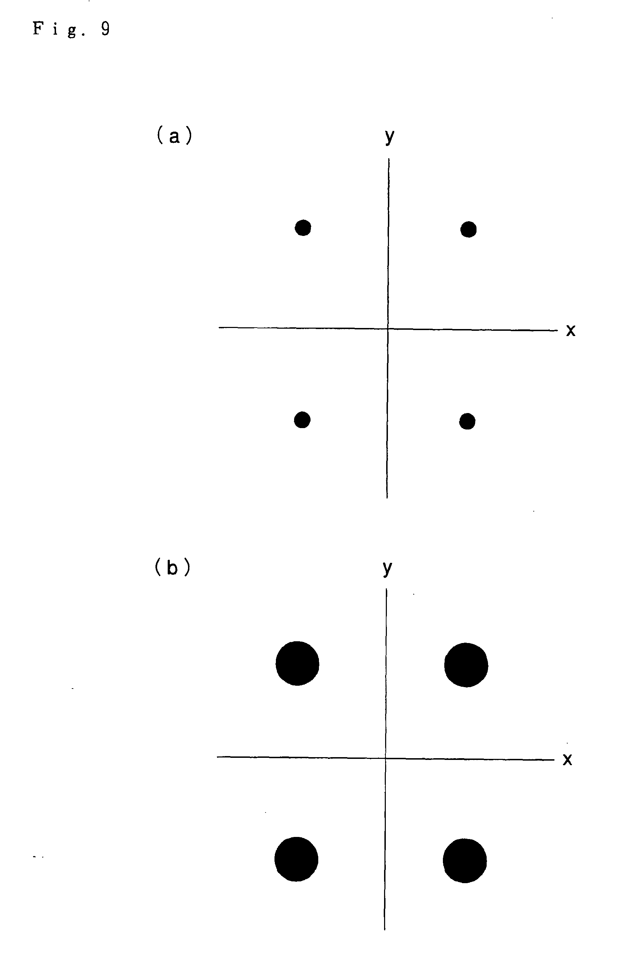

Fig. 9 (a) illustrates an eye pattern in a normal condition that is detected by 2-bit reception signals (prior art);
Fig. 9 (b) illustrates an eye pattern in an abnormal condition that is detected by 2-bit reception signals (prior art);

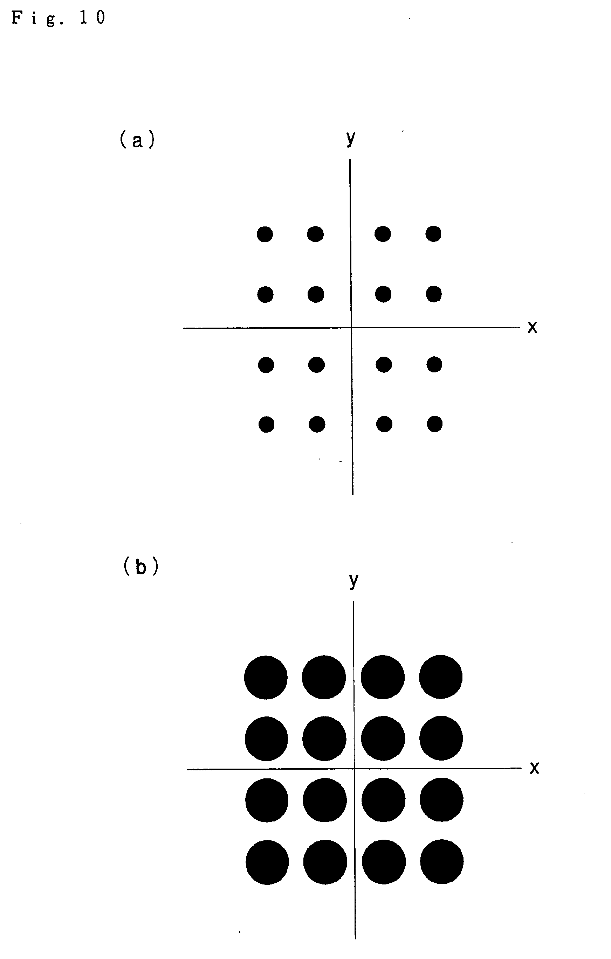

Fig. 10 (a) illustrates an eye pattern in a normal condition that is detected by 4-bit reception signals (prior art); and
Fig. 10 (b) illustrates an eye pattern in an abnormal condition that is detected by 4-bit reception signals (prior art).

### DETAILED DESCRIPTION OF PREFERRED EMBODIMENTS

The embodiments of the present invention are explained in the following, in reference to the above-described drawings.

### First Embodiment

Fig. 1 is a block diagram illustrating a configuration of the modem apparatus with error detection functions, according to the first embodiment of the present invention.

In Fig. 1, an A/D (D/A) converter 101 performs a digital/analog conversion process (D/A conversion process) for signals that are output to a public switched telephone network (PSTN), and performs an analog/digital conversion process (A/D conversion process) for signals that are input from the PSTN.

An FFT (Fast Fourier Transform) processor 102 performs a Fourier conversion process for signals after the A/D conversion process by the A/D (D/A) converter 101. The signals after the Fourier conversion process are output to a main controller 103.

An IFFT (Inverse Fast Fourier Transform) processor 104 performs a reverse Fourier conversion process for the signals that are delivered from the main controller 103, and outputs the signals to the A/D (D/A) converter 101.

The main controller 103 controls the entire modem apparatus that is provided with error detection functions. Also, based on the output from the FFT processor 102 (hereafter referred to as FFT output), the main controller 103 calculates a deviation (hereafter referred to as error amount) between a coordinate point (hereafter referred to as reception point) of an eye pattern that is displayed on an error detector, such as an oscilloscope, and a coordinate point (hereafter referred to as target point) of a target eye pattern that is plotted from the FFT output. The main controller 103 comprises an eye pattern display controller 105 that controls to display the error amount as an eye pattern on the error detector. The error amount calculation at the eye pattern display controller 105 is later described.

The data to show the error amount, which is calculated by the eye pattern display controller 105, is input to the eye pattern display interface (I/F) 106. The eye pattern display I/F 106 outputs the input data from the eye pattern display controller 105 as coordinate information on an X-Y plane on the display screen of an oscilloscope 107, which functions as an error detector.

The modem apparatus with error detection functions enables an observer to detect communication errors in multi-carrier communication adhering to ITU-T standards, such as G. 992. 1 (G. DMT) and G. 992. 2 (G. lite), through observations of the reception status, based on the eye patterns that are detected from reception signals.

In standards such as G. 992. 1, the DMT (Discrete Multi Tone) is employed as a modulating/demodulating method. The DMT method is a multi-carrier modulating/demodulating method that uses multiple carriers (sub-carriers) with different frequencies.

Fig. 2 illustrates frequency characteristics of multi-carriers in the DMT method. In Fig. 2, lateral axis is frequency (f/kHz), and vertical axis is gain amount (G/db). The DMT method has 250 sub-carriers with different frequencies of 4 kHz range. In such standards, sub-carriers are usually divided into outbound signals (transmission signals) and inbound signals (reception signals); however, for the convenience of explanation, the sub-carriers in Fig. 2 are all sub-carriers of inbound signals.

The modem apparatus with error detection functions, according to the present embodiment, unlike the conventional modem apparatuses, displays not only the eye patterns of reception signals on an oscilloscope, but also the error amounts (error amounts of reception signals), which are deviations between coordinate points of eye patterns of actual reception signals of each sub-carrier, and the coordinate points of the eye patterns that are originally plotted from the reception signals, on the oscilloscope 107. In other words, deviations of reception signals created in each sub-carrier, due to factors such as line conditions, are displayed on the oscilloscope 107.

To display what is described above on the oscilloscope 107, the modem apparatus with error detection functions according to the embodiment of the present invention, adds a carrier index with a number, to each sub-carrier. The carrier indexes are lined up in the order of their frequency amounts, from low to high frequencies.

From now on, Fig. 3 is used to illustrate a flow for the modem apparatus with error detection functions to calculate an error amount of reception signals. Fig. 3 is a flowchart illustrating a calculation of error amounts of reception signals at the modem apparatus with error detection functions.

This flow starts when the oscilloscope 107, as an error detector, is connected to the modem apparatus with error detection functions, and the oscilloscope 107 gives an instruction to display the eye pattern of reception signals. The flow ends when the connected oscilloscope 107 sends an instruction to end the display of the eye pattern of reception signals.

When the oscilloscope 107 is connected, and upon receiving of an instruction for eye pattern display of reception signals from the oscilloscope 107, the main controller 103 of the modem apparatus with error detection functions first initializes carrier indexes (N) (ST301). Accordingly, the sub-carrier that is used to calculate the error amount of the reception signals becomes sub-carrier with Carrier Index "1". Then, the main controller 103 waits for a symbol interruption (ST302).

In the modem apparatus with error detection functions, a symbol interruption is performed every 250 µ second. The sample data of the reception signals are obtained about every 1 µ second. Accordingly, about every 1 µ second, the A/D (D/A) converter 101 performs the A/D conversion process and outputs the data to the FFT processor 102. If there is a symbol interruption, the FFT processor 102 performs the FFT process for the sampling data (ST303). Thus, when the sampling data is stored for one symbol, the FFT processor 102 performs the FFT process once.

Here, the sub-carrier that is used to calculate the error amount of the reception signals is a sub-carrier with Carrier Index "1". Therefore, when the FFT process is performed, the sampling data that corresponds with Carrier Index "1" is shown as a coordinate point of an I-R (Imaginary-Real) plane. The coordinate information of the I-R plane is output to the main controller 103.

In the main controller 103, the eye pattern display controller 105 calculates the error amount of the reception signals with Carrier Index "1", based on the coordinate information of the I-R plane (ST304). From now on, the error amount calculation of the reception signals by the eye pattern display controller 105 is further explained. The coordinate information on the I-R plane that is input by the main controller 103 represents the coordinate information of an X-Y plane on the display screen of the oscilloscope 107.

Fig. 4 illustrates an actual reception point of reception signals and a target point plotted from the reception signals as coordinate points on the X-Y plane of the display screen of the oscilloscope 107. In this embodiment, the target point is (x₁, y₁), and the actual reception point of reception signals with Carrier Index "1" is (x₂, y₂).

The eye pattern display controller 105 searches for the distance between these reception point and target point. The distance that is searched here represents the error amount of the reception signals with Carrier Index "1".

In particular, the eye pattern display controller 105 calculates (x₂ - x₁)² + (y₂ - y₁)², and by retrieving the distance between these reception and target points, an error amount of reception signals with Carrier Index "1" is calculated. In this embodiment, "E1" is calculated as an error amount of the reception signals with Carrier Index "1".

Upon calculating the error amount "E1", the eye pattern display controller 105 outputs "E1" to the eye pattern display I/F 106 (ST305). The eye pattern display I/F 106, then outputs "E1", as coordinate information of the X-Y plane on the display screen of the oscilloscope 107. At this time, the coordinate information for X-axis is determined based on the carrier index, while the coordinate information for Y-axis is determined based on the calculated error amount. For example, the eye pattern display I/F 106 outputs "1", which is a corresponding value of Carrier Index "1", as the coordinate in formation for X-axis, while outputting "E1", which is an error amount calculated from the reception signal for Carrier Index "1", as the coordinate information for Y-axis.

After outputting the error amount of the reception signals with Carrier Index "1" to the eye pattern display I/F 106, the main controller 103 increases the number of the carrier index (N) by one (ST306). Accordingly, the sub-carrier that is used to calculate the error amount of the reception signals becomes a sub-carrier with Carrier Index "2".

Upon increasing the number of the carrier index (N) by one, the main controller 103 checks whether the number indicates the maximum carrier index (ST307). At this time, Carrier Index "2" is checked. In this embodiment, the maximum carrier index is "255", for example. Therefore, the main controller 103 goes to the process at Step 302, and waits for another symbol interruption.

If there is a symbol interruption, the FFT processor 102 performs the FFT process, similar to the process of Carrier Index "1" (ST303). In this case, the sub-carrier that is used to calculate the error amount of reception signals is a sub-carrier with Carrier Index "2", therefore, after the FFT process, the sampling data that corresponds with Carrier Index "2" is displayed as a coordinate point on the I-R plane. The coordinate information of the I-R plane is output to the main controller 103.

This time, at the main controller 103, the eye pattern display controller 105 calculates the error amount of the reception signals with Carrier Index "2" (ST304). In this case, "E2" is calculated as the error amount of the reception signals with Carrier Index "2".

After the error amount "E2" is calculated, the eye pattern display controller 105 outputs "E2" to the eye pattern display I/F 106 (ST305). Then, the main controller 103 increases the number of carrier index (N) by one again (ST306). Accordingly, the sub-carrier that is used to calculate the error amount of the reception signals becomes a sub-carrier with Carrier Index "3".

Likewise, the modem apparatus with error detection functions of the present embodiment calculates an error amount of reception signals of current sub-carrier, every time there is a symbol interruption, outputs the error amount to the oscilloscope 107, and increases the sub-carriers that are used to calculate the error amount of the reception signals.

Fig. 5 illustrates sub-carriers that are used to calculate error amounts of reception signals. As shown in Fig. 5, the sub-carriers are increased, every time there is a symbol interruption. Fig. 5 (a) illustrates a sub-carrier for the first symbol interruption, Fig. 5 (b) is for the second symbol interruption, and Fig. 5 (c) is for the third symbol interruption.

Therefore, when there is the first symbol interruption (symbol interruption ①), an error amount of the reception signals of a sub-carrier with Carrier Index "1" is calculated. When there is the second symbol interruption (symbol interruption ②), an error amount of the reception signals with Carrier Index "2" is calculated. Similarly, the carrier indexes are increased in order, so that the error amount of reception signals of each sub-carrier is individually calculated.

Upon increasing the carrier indexes that are used to calculate error amounts of reception signals, and when a maximum carrier index is found at Step 307, the main controller 103 initializes the carrier index (N) (ST308), and goes to the process at Step 302, and waits for another symbol interruption.

Fig. 6 (a) illustrates an example of the screen of oscilloscope 107, when the error amount that is output from the modem apparatus with error detection functions is displayed. After the above-described calculation, when there is symbol interruption ①, "E1" is displayed as an error amount of the reception signals of the sub-carrier with Carrier Index "1", and when there is symbol interruption ②, "E2" is displayed as an error amount of the reception signals of the sub-carrier with Carrier Index "2". Similarly, for every symbol interruption, "E3", "E4" ... "E254", and "E255" are displayed.

In Fig. 6 (a), carrier index is used for coordinate information for the X-axis, each plot is arranged from a predetermined point in the order of carrier index number, toward the positive direction.

In Fig. 6 (a), the closer each error amount is to "0" (i.e., closer to X-axis), the less the error amount of reception signals of each sub-carrier. By repeating the flow of Fig. 3, the observer can observe error amounts of reception signals for each sub-carrier. For example, the error amounts shown in Fig. 6 (a) are averaged amounts of normal error amount of reception signals for each sub-carrier.

In comparison with the observation of such averaged amounts, an observer can connect the oscilloscope 107 to the modem apparatus with error detection functions, and check the error amounts of reception signals for each sub-carrier. Then, Fig. 6 (b) can be displayed on the oscilloscope 107 to show error amounts.

In this case, by comparing with the error amounts of reception signals observed before (error amounts of Fig. 6 (a)), the observer can recognize that the current reception status is not normal. Also, with the display of error amounts of reception signals of each sub-carrier on the oscilloscope 107, the observer can confirm the actual level of error in each sub-carrier.

According to the modem apparatus with error detection functions of the present embodiment, error amounts of reception signals of each sub-carrier are displayed on the oscilloscope 107 as an eye pattern. Therefore, from the observation of reception status based on the eye pattern, which is detected from the reception signals of all the sub-carriers, the observer can detect error amounts even in multi-carrier communication.

Also, error amounts of reception signals for each sub-carrier are displayed on the oscilloscope 107, the observer can confirm among the multi-carriers which sub-carrier has abnormal reception status.

### Second Embodiment

The difference between the first and second embodiments is that the modem apparatus with error detection functions of the first embodiment calculates error amounts of reception signals of each sub-carrier, while the modem apparatus with error detection functions of the second embodiment calculates error amounts that are normalized from the error amounts of reception signals of each sub-carrier (normalized error amounts).

In ITU-T standards such as G. 992. 1 (G.DMT), suppression of data transmission quality degradation is performed by decreasing the data amount of sub-carriers that have transmitted wave hindrances such as noise. In particular, using results from C and R-Medley of G. 992. 1 (G. DMT), data amounts of each sub-carrier are set according to conditions such as line conditions.

The modem apparatus with error detection functions of the second embodiment focuses on the above-described point not only calculates error amounts of reception signals of each sub-carrier, but also calculates normalized error amounts that are normalized from the calculated error amounts. Specifically, after calculating error amounts in a similar method as the modem apparatus with error detection functions of the first embodiment, the modem apparatus with error detection functions of the second embodiment performs an exponential operation of "2" (2ⁿ), for the error amount, using data amount of each sub-carrier, which is the bit number (n) that is assigned to each sub-carrier, to retrieve a normalized error amount.

Particularly, the modem apparatus with error detection functions of the first embodiment can confirm the actual level of communication error in each sub-carrier, however, it is unable to detect which sub-carrier is likely to have communication errors. The modem apparatus with error detection functions of the second embodiment is able to detect which sub-carrier is likely to have errors, by further normalizing calculated error amounts.

The modem apparatus with error detection functions of the second embodiment has the same configuration as the modem apparatus with error detection functions of the first embodiment, except in the following areas.

In the modem apparatus with error detection functions of the second embodiment, the eye pattern display controller 105 has a function to normalize calculated error amounts, in addition to the functions of eye pattern display controller 105 of the first embodiment.

Specifically, the eye pattern display controller 105 of the second embodiment has a function to calculate normalized error amount by performing the exponential operation of "2" (2ⁿ), for the calculated error amount, using the data amount set in each sub-carrier, which is the bit number (n) that is assigned to each sub-carrier.

From now on, Fig. 7 is used to illustrate the flow of calculating normalized error amounts from reception signals by the modem apparatus with error detection functions of the second embodiment. Fig. 7 is a flowchart to illustrate the calculation of normalized error amount of reception signals by the modem apparatus with error detection functions of the second embodiment. In Fig. 7, the process with the same Step numberings as Fig. 3 performs the same process as Fig. 3.

The flow in Fig. 7 also starts when the oscilloscope 107 as an error detector is connected to the modem apparatus with error detection functions, and when an instruction is given for an eye pattern display of reception signals, by the oscilloscope 107. The flow in Fig. 7 finishes when an instruction is given to end the eye pattern display by the connected oscilloscope 107.

As shown in Fig. 7, the process from initialization of carrier index (N) (ST301) to the calculation of error amounts of carrier index (N) (ST304) is the same as the process of the modem apparatus with error detection functions of the first embodiment, therefore, the description of the same is omitted.

In this explanation, error amount of Carrier Index "1" is calculated, and the error amount is "E1". 2 bit data is assigned for Carrier Index "1".

After the error amount "E1" is calculated at Step 304, eye pattern display controller 105 performs the exponential operation of "2" (2ⁿ), for the calculated error amount "E1", using the bit number (n) that is assigned to Carrier Index "1" to calculate normalized error amount (ST701). In this embodiment, "S1" is calculated as a normalized error amount of reception signals with Carrier Index "1".

After the normalized error amount "S1" is calculated, the eye pattern display controller 105 outputs "S1" to the eye pattern display I/F 106 (ST702). The eye pattern display I/F 106 outputs "S1" as coordinate information of the X-Y plane on the display screen of the oscilloscope 107. At this time, the coordinate information for X-axis is determined based on the carrier index, while the coordinate information for Y-axis is determined based on the calculated normalized error amount. For example, the eye pattern display I/F 106 outputs "1", which is a corresponding value of Carrier Index "1", as the coordinate information for X-axis, while outputting "S1", which is a normalized error amount calculated from the reception signal of Carrier Index "1", as the coordinate information for Y-axis.

After outputting the normalized error amount of reception signals with Carrier Index "1" to the eye pattern display I/F 106, the main controller 103 increases the number of carrier index (N) by one (ST306). Accordingly, sub-carrier that is used to calculate the normalized error amount of reception signals becomes a sub-carrier with Carrier Index "2".

Similar to the process of the first embodiment, whether the current Carrier Index "N" is the maximum carrier index is checked (ST307). If it is not the maximum carrier index, the process of Steps 302 -307 is repeated. If the maximum carrier index is "255", for example, normalized error amounts of reception signals of Carrier Indexes "2" to "255" are calculated and output to the oscilloscope 107 via the eye pattern display I/F 106.

When the maximum carrier index is processed, on the other hand, the main controller 103 initializes carrier index (N) (ST308), and goes to the process at Step 302 to wait for another symbol interruption.

Fig. 8 (a) shows an example of the screen of the oscilloscope 107, when the normalized error amount, which is output from the modem apparatus with error detection functions of the second embodiment, is displayed. As a result of the above-described calculation, when there is a symbol interruption ①, "S1" is displayed as a normalized error amount of reception signals of sub-carrier with Carrier Index "1". When there is a symbol interruption ②, "S2" is displayed as a normalized error amount of reception signals of sub-carrier with Carrier Index "2". Similarly, every time there is a symbol interruption, "S3", "S4"..."S254", and "S255" are displayed.

In Fig. 8 (a), the closer each normalized error amount is to "0" (closer to X-axis), the less likely that there is communication errors for reception signals of each carriers. By repeating the flow of Fig. 7, the observer can observe the averaged value of normalized error amount of reception signals of each sub-carrier in normal status. For example, normalized error amounts of Fig. 8 (a), are averaged values of normalized error amount of reception signals of each sub-carrier.

When observing such averaged values, when the observer connects the oscilloscope 107 to the modem apparatus with error detection functions, to check the normalized error amounts of reception signals of each sub-carrier, normalized error amounts of Fig. 8 (b) is displayed on the oscilloscope 107.

At this time, in comparison with the normalized error amounts of reception signals that are already observed (normalized error amounts in Fig. 8 (a)), the observer can recognize that, with the current reception status, it is likely to have communication errors. Also, since the normalized error amounts of reception signals of each sub-carrier are displayed on the oscilloscope 107, the observer can determine which sub-carrier actually is likely to have communication errors.

According to the modem apparatus with error detection functions of the second embodiment, normalized error amounts of reception signals of each sub-carrier are displayed on the oscilloscope 107. Therefore, even in multi-carrier communication, it is possible to detect communication errors through observations of reception status based on eye patterns that are detected from the reception signals.

Also, normalized error amounts of reception signals of each sub-carrier are displayed on the oscilloscope 107, therefore, the observer can determine which sub-carrier's reception status of multi-carriers is likely to have communication errors.

In the second embodiment, the explanation is done as a separate apparatus from the first embodiment. However, the present invention is not limited to the embodiment, and the calculation display of error amount of the first embodiment and normalized error amounts of the second embodiment can be switched according to the instruction of the observer, on the oscilloscope 107.

In this case, the display of error amounts and normalized error amounts can be switched on the oscilloscope 107 according to the instruction of the observer. Accordingly, the observer can confirm which reception status of sub-carrier of multi-carrier is having an abnormal condition, and determine which sub-carrier's reception status of multi-carrier is likely to have communication errors.

The present invention is not limited to the above-described embodiments, and various variations and modifications may be possible without departing from the scope of the present invention.

This application is based on the Japanese Patent Application No. 2001-196505 filed on June 28, 2001, entire content of which is expressly incorporated by reference herein.

## Claims

1. A modem apparatus with error detection functions comprising:
a fast Fourier transformation processor that performs a fast Fourier transformation process on sampling data of a reception signal to obtains coordinate information an I-R plane; and
a display controller that calculates a deviation amount between the coordinate information on the I-R plane obtained from the reception signal and target coordinate information on the I-R plane predicted from the reception signal, and displays the deviation amount as coordinate information on a display screen of an externally connected error detector.

2. The modem apparatus of Claim 1, wherein said display controller displays the deviation amount as coordinate information on the display screen of the error detector, the deviation amount being calculated from sampling data of a reception signal of any one of multi-carriers with different frequencies, and further displays another deviation amount as coordinate information on the display screen of the error detector, the deviation amount being calculated from sampling data of a reception signal of a succeeding carrier, the carrier having a higher frequency than a frequency of the carrier used to calculate the previous deviation amount.

3. The modem apparatus of Claim 2, further adds a number to each carrier of multi-carriers,
wherein said display controller displays the deviation amount as coordinate information on the display screen of the error detector in association with the added number of each carrier, the deviation amount being calculated from sampling data of a reception signal of any one of carriers.

4. The modem apparatus of Claim 2, wherein said display controller calculates a second deviation amount normalized by a predetermined operation process using data amount assigned to the carrier, the operation process being performed on a deviation amount calculated from sampling data of a reception signal of any one of the multi-carriers, and displays the second deviation amount as coordinate information on the display screen of the error detector.

5. The modem apparatus of Claim 4, further adds a number to each carrier of multi-carriers,
wherein said display controller displays the second deviation amount on the display screen of the error detector as coordinate information in association with the added number of each carrier, the second deviation amount being calculated from sampling data of a reception signal of any one of carriers.

6. The modem apparatus of Claim 4, wherein said display controller switches the deviation amount and the second deviation amount to be displayed as coordinate information on the display screen of the error detector.

7. An error detection method comprising:
performing a fast Fourier transformation process on sampling data of a reception signal to obtain coordinate information on an I-R plane by;
calculating a deviation amount between the coordinate information of the I-R plane obtained from the reception signal and coordinate information of the I-R plane predicted from the reception signal; and
displaying the deviation amount as coordinate information on a display screen of an externally connected error detector.

8. The error detection method of Claim 7 further comprising:
displaying the deviation amount as coordinate information on the display screen of the error detector, the deviation amount being calculated from sampling data of a reception signal of any one of multi-carriers with different frequencies; and
further displaying another deviation amount as coordinate information on the display screen of the error detector, the deviation amount being calculated from sampling data of a reception signal of a succeeding carrier, the carrier having a higher frequency than a frequency of the carrier used to calculate the previous deviation amount.

9. A modem apparatus having error detection functions detecting communication status of a communication that is performed under a multi-carrier method employing a plurality of carriers with different frequencies, the status being displayed on a display screen of an externally connected error detector, the modem apparatus comprising:
an AD converter that samples a reception analog signal received from a telephone line and outputs the sample data;
a fast Fourier transformation processor that performs a fast Fourier transformation on the sample data by a symbol unit to obtain coordinate information of an I-R plane in association with the sample data of any one of multi-carriers, the carrier configuring the reception analog signal;
a display controller that calculates a deviation amount between the coordinate information of the I-R plane obtained by said fast Fourier transformation processor and target coordination information of the I-R plane predicted from the reception analog signal; and
a display interface that converts the deviation amount into coordinate information on the display screen of the error detector, and displays the coordinate information in association with the information of the carrier used for the error detection.
